# DEMANDE DE BREVET EUROPEEN

(11) **EP 3 764 534 A1**
(43) Date de publication de la demande: **13.01.2021**
(21) Numéro de dépôt: 20184697.9
(22) Date de dépôt: 08.07.2020
(51) Int. Cl.: H02M 7/5387, H02M 3/157

(54) **PROCEDE DE COMMANDE D'UN ORGANE DE COMMUTATION ET DISPOSITIFS ASSOCIES**

(30) Priorité: 10.07.2019 FR 1907735
(71) Demandeur: ALSTOM Transport Technologies, 93400 Saint-Ouen (FR)
(72) Inventeur: LEPAGE, Jean-Pierre, 65460 BOURS (FR)
(74) Mandataire: Lavoix

(57) **Abrégé**

La présente invention concerne un procédé de commande d'au moins un organe de commutation (33) par un organe de commande (44) faisant partie d'un module de puissance (40), le procédé comportant :
- la réception par l'organe de commande (44) d'au moins un jeu de paramètres pour le calcul d'au moins une loi de commande de l'organe de commutation (34),
- la mise en œuvre par l'au moins un organe de commande (34) d'au moins une opération à partir de chaque jeu de paramètres pour obtenir au moins une loi de commande, et
- l'envoi par l'organe de commande (44) de chaque loi de commande obtenue à destination de l'organe de commutation (33).

## Description

La présente invention concerne un procédé de commande d'un organe de commutation. La présente invention se rapporte également à un module de puissance, un véhicule ferroviaire, une installation ferroviaire, un produit programme d'ordinateur et un support lisible d'informations associés.

Dans les installations ferroviaires, de nombreuses interactions sous forme de signaux ont lieu entre les différents éléments faisant partie de l'installation ferroviaire.

A titre d'exemple spécifique, les systèmes de puissances comme le système de traction d'un véhicule ferroviaire sont contrôlés par un contrôleur central qui envoie l'ensemble des ordres de commande pour chaque commutateur de puissance faisant partie du système de traction. De tels ordres de commandes sont envoyés par le biais d'une liaison filaire formée par des câbles.

Or, le nombre de données échangées entre le contrôleur central et les commutateurs ne cesse d'augmenter. Cette augmentation a plusieurs causes.

D'abord, les fréquences de découpage sont de plus en plus élevées d'une part, parce que les commutateurs sont de plus en plus compatibles avec des fréquences de découpage importante et, d'autre part, parce que la qualité de la conversion d'énergie est d'autant meilleure que la fréquence de découpage est grande. Cela implique que la cadence d'envoi des ordres de commande augmente.

Ensuite, les systèmes de puissance actuels impliquent de plus en plus de commutateurs du fait de l'augmentation des besoins en conversion d'énergie. Ainsi, même avec une cadence identique, il convient d'ajouter l'ensemble des ordres de commande à chaque nouveau commutateur ajouté.

Pour faire face à une telle augmentation des fréquences de découpage et du nombre de commutateurs, il est connu de remplacer la liaison filaire par une liaison optique qui permet d'augmenter le débit d'informations qu'il est possible de transmettre entre le contrôleur central et les commutateurs.

Toutefois, le débit d'informations maximal que permettrait d'atteindre une liaison optique n'est en pratique pas atteint du fait du fort taux d'erreur de transmission.

Le taux d'erreur de transmission est le nombre d'erreurs par unité de temps. Un tel taux étant proportionnel au nombre de données transmises par la liaison optique, le taux d'erreur est élevé.

De plus, les techniques de correction d'erreur connues ont, dans une telle application en temps réel, une utilité limitée du fait que leur mise en œuvre implique un temps le plus souvent trop long au regard de la latence admissible par le système de puissance, la latence étant définie comme l'intervalle de temps entre l'instant où une donnée est calculée et l'instant où ladite donnée est effectivement appliquée.

Compte-tenu de la bonne fiabilité à garantir pour l'installation ferroviaire, en particulier pour ce qui concerne la sécurité de circulation des trains, il convient de diminuer le nombre de données transmises dans le réseau.

Il existe donc un besoin pour un procédé permettant la commande d'au moins un organe de commutation qui soit compatible avec l'augmentation des fréquences de découpage et du nombre de commutateurs.

A cet effet, il est proposé un procédé de commande d'au moins un organe de commutation par un organe de commande faisant partie d'un module de puissance, le procédé comportant la réception par l'organe de commande d'au moins un jeu de paramètres pour le calcul d'au moins une loi de commande de l'organe de commutation, la mise en œuvre par l'au moins un organe de commande d'au moins une opération à partir de chaque jeu de paramètres pour obtenir au moins une loi de commande, et l'envoi par l'organe de commande de chaque loi de commande obtenue à destination de l'organe de commutation.

Suivant des modes de réalisation particuliers, le procédé comprend une ou plusieurs des caractéristiques suivantes, prise(s) isolément ou suivant toutes les combinaisons techniquement possibles :
- le module de puissance est contrôlé par un contrôleur central, le procédé comportant, en outre, l'envoi du au moins un jeu de paramètres à l'organe de commande par le contrôleur central.
- la loi de commande est une modulation de largeur d'impulsions.
- au moins une opération est une opération d'utilisation d'une table associant des valeurs à au moins un paramètre du jeu de paramètres reçu par le module de puissance.
- la loi de commande est obtenue à partir d'une fonction souhaitée et d'une fonction de découpage, le jeu de paramètres comportant une grandeur représentative de la fréquence de la fonction souhaitée et une grandeur représentative du rapport en amplitude entre la fonction souhaitée et la fonction de découpage.
- les paramètres de jeux de paramètres présentent une taille comprise entre 16 bits et 24 bits.

Il est également proposé un organe de commande adapté à commander au moins un organe de commutation, l'organe de commande étant adapté à recevoir au moins un jeu de paramètres pour le calcul d'au moins une loi de commande de l'organe de commutation, mettre en œuvre au moins une opération à partir de chaque jeu de paramètres pour obtenir au moins une loi de commande, et envoyer chaque loi de commande obtenue à destination de chaque organe de commutation.

L'invention a également pour objet un véhicule ferroviaire comportant un module de puissance comprenant un organe de commutation et un organe de commande tel que précédemment décrit.

Suivant un mode de réalisation particulier, le module de puissance est propre à commander l'alimentation en énergie électrique d'un moteur de traction.

L'invention a également pour objet une installation ferroviaire comportant un module de puissance comprenant un organe de commutation et un organe de commande tel que précédemment décrit.

Suivant un mode de réalisation particulier, le module de puissance est propre à commander l'alimentation en énergie électrique d'un moteur de traction.

Il est également proposé un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'au moins une étape d'un procédé tel que précédemment décrit lorsque le programme d'ordinateur est mis en œuvre sur l'unité de traitement des données.

L'invention concerne également un support lisible d'informations mémorisant un programme d'ordinateur comprenant des instructions de programme, le programme d'ordinateur étant chargeable sur une unité de traitement de données et adapté pour entraîner la mise en œuvre d'au moins une étape d'un procédé tel que précédemment décrit lorsque le programme d'ordinateur est mis en œuvre sur l'unité de traitement des données.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une représentation schématique d'une partie d'une installation ferroviaire comportant des équipements électroniques,
- figure 2, une représentation schématique d'un équipement électronique,
- figure 3, un ordinogramme d'un exemple de mise en œuvre d'un procédé de commande, et
- figure 4, un chronogramme représentant un exemple de modulante, de fonction de découpage et d'une loi de commande correspondante, la loi de commande étant obtenue à partir de la fonction de découpage et de la modulante, et
- figure 5, un ordinogramme d'un exemple de réalisation d'une étape du procédé dont la mise en œuvre est illustrée à la figure 4.

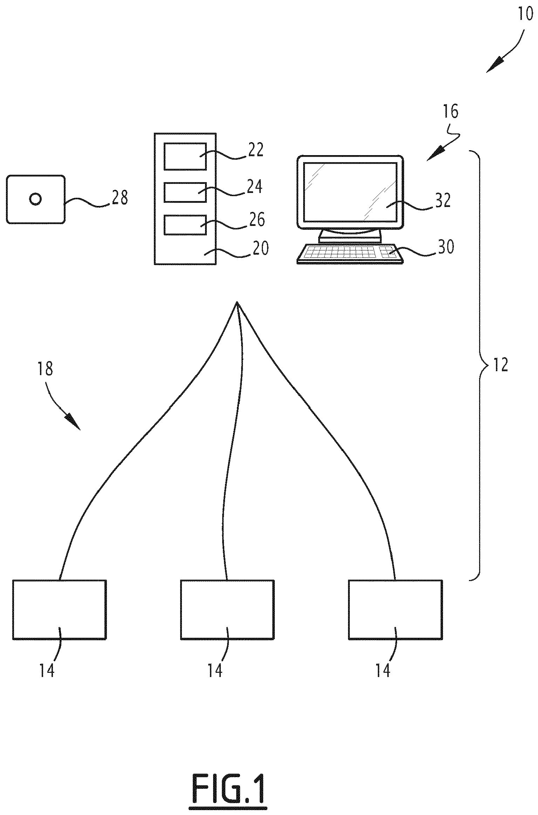

Une partie d'une installation ferroviaire 10 est représentée sur la figure 1.

Une installation ferroviaire 10 est une installation comprenant un réseau ferroviaire et des véhicules ferroviaires.

Un véhicule ferroviaire est, par exemple, un métro équipé d'une ventilation de secours, un train ou un tramway.

Le véhicule ferroviaire comporte un système de contrôle 12 et un ensemble d'équipements électroniques 14.

Dans l'exemple décrit, le système de contrôle 12 et l'ensemble d'équipements électroniques 14 forment un système de traction d'un véhicule ferroviaire.

Le système de contrôle 12 comporte un contrôleur central 16 et un réseau filaire 18.

Le contrôleur central 16 est propre à commander chaque équipement électronique 14.

Selon l'exemple décrit, le contrôleur central 16 est une unité de contrôle d'une chaîne de traction d'un véhicule ferroviaire.

A titre d'exemple, le contrôleur central 16 est un ordinateur.

Plus généralement, le contrôleur central 16 est un calculateur électronique propre à manipuler des données représentées comme des quantités électroniques ou physiques dans des registres du contrôleur central 16 et/ou des mémoires.

Le contrôleur central 16 comporte un processeur 20 comprenant une unité de traitement de données 22, des mémoires 24 et un lecteur 26 de support d'informations propre à lire un support lisible d'informations comportant un produit programme d'ordinateur 28. Le contrôleur central 16 comprend également un clavier 30 et une unité d'affichage 32.

Le produit programme d'ordinateur 28 comporte un support lisible d'informations.

Un support lisible d'informations est un support lisible par le contrôleur central 16, usuellement par l'unité de traitement de données 22. Le support lisible d'informations est un médium adapté à mémoriser des instructions électroniques et capable d'être couplé à un bus d'un système informatique.

A titre d'exemple, le support lisible d'informations est une disquette ou disque souple (de la dénomination anglaise de « *floppy disk* »), un disque optique, un CD-ROM, un disque magnéto-optique, une mémoire ROM, une mémoire RAM, une mémoire EPROM, une mémoire EEPROM, une carte magnétique, une carte optique, une mémoire flash ou un disque SSD.

Sur le support lisible d'informations est mémorisé un programme d'ordinateur comprenant des instructions de programme.

Le programme d'ordinateur est chargeable sur l'unité de traitement de données 22 et est adapté pour entraîner la mise en œuvre de calculs.

Le réseau filaire 18 est un ensemble de câbles.

Au moins un câble relie le contrôleur central 16 à chaque équipement électronique 14.

Chaque équipement électronique 14 est un équipement de haute tension. Par une telle expression, il est entendu que chaque équipement électronique 14 est destiné à être alimenté en haute tension, c'est-à-dire typiquement une tension continue d'une valeur nominale supérieure ou égale à 600 Vdc. Par exemple, dans l'exemple représenté, la tension d'alimentation de chaque équipement électronique 14 est égale à 1500 Vdc.

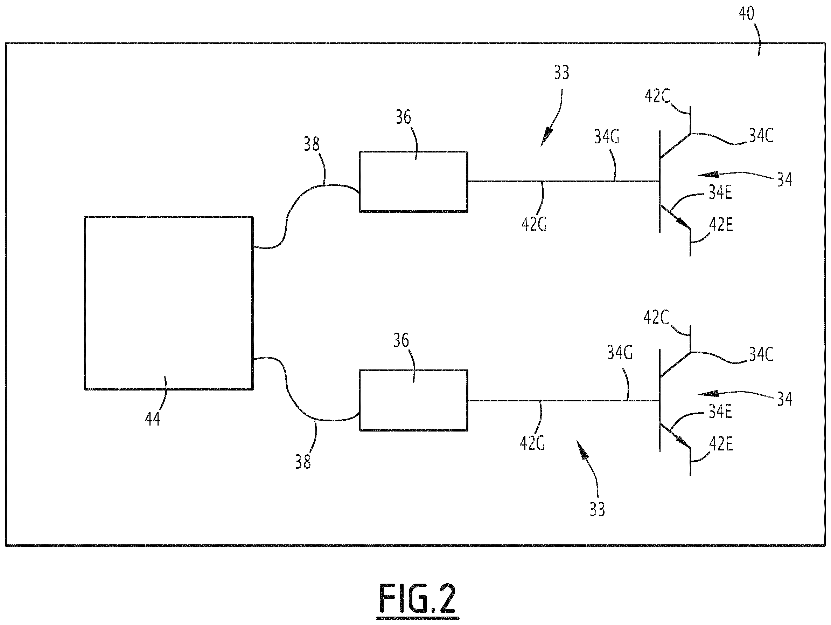

Un exemple d'équipement électronique 14 est visible sur la figure 2.

L'équipement électronique 14 comporte un module de puissance 40 comprenant une pluralité d'organes de commutation 33 formé par un commutateur 34 et une commande de grille 36, un lien électrique 38 et un organe de commande 44.

Le module de puissance 40 est souvent désigné sous le terme anglais de « power module ».

Le module de puissance 40 est, de préférence, propre à commander l'alimentation en énergie électrique d'un moteur de traction.

A titre d'exemple et sans que cela soit limitatif, sur la figure 2, sont représentés deux organes de commutations 33, c'est-à-dire deux commutateurs 34 et deux commandes de grille 36.

Chaque commutateur 34 est un commutateur de puissance.

De plus, dans le cas de la figure, chaque commutateur 34 est un transistor.

Selon l'exemple décrit, chaque commutateur 34 est, par exemple, un transistor bipolaire à grille isolée (aussi désigné par l'acronyme IGBT renvoyant au terme anglais d' « Insulated Gâte Bipolar Transistor »).

Dans un tel cas, chaque commutateur 34 est un composant comportant trois bornes appelées la grille 34G (aussi désignée par le terme « gâte » en anglais), le collecteur 34C et l'émetteur 34E.

En outre, chaque commutateur 34 est porté à des tensions très élevées pouvant atteindre plusieurs milliers de volts.

Chaque commutateur 34 est relié électriquement au reste du circuit par des liens électriques 42E et 42C aussi appelés broches 42E et 42C. Au moins une des broches 42E ou 42C est un busbar.

Chaque commutateur 34 est également relié électriquement au niveau de la grille 34G à une commande de grille 36 respective par un lien électrique 42G.

Chaque commande de grille 36 est également désignée sous le terme anglais de « gâte driver ».

Chaque commande de grille 36 est propre à commander un commutateur 34 respectif.

Le lien électrique 38 relie l'organe de commande 44 à chaque organe de commutation 33 et plus précisément à chaque commande de grille 36.

L'organe de commande 44 est propre à commander chaque organe de commutation 33. Plus précisément, l'organe de commande 44 est propre à commander l'ensemble des commutateurs 34 via les commandes de grille 36.

L'organe de commande 44 est également appelé allumeur.

A titre d'exemple particulier, l'allumeur est un calculateur ou un microprocesseur.

En variante, l'organe de commande 44 est un circuit logique programmable.

Par définition, un circuit logique programmable est un circuit intégré logique qui peut être reprogrammé après avoir été fabriqué.

Par exemple, l'organe de commande 44 est un circuit FPGA. FPGA est un sigle renvoyant à la dénomination anglaise de « Field-programmable gate array » qui se traduit le plus souvent par réseau de portes programmables in situ.

En variante, l'organe de commande 44 est un circuit PLD (sigle renvoyant à la dénomination anglaise de « Programmable logic device » qui se traduit le plus souvent par circuit logique programmable), un circuit EPLD (sigle renvoyant à la dénomination anglaise de « Erasable programmable logic device » qui se traduit le plus souvent par circuit logique programmable et effaçable), un circuit CPLD (sigle renvoyant à la dénomination anglaise de « Complex programmable logic device » qui se traduit le plus souvent par circuit logique programmable complexe), un circuit PAL (sigle renvoyant à la dénomination anglaise de « Programmable array logic » qui se traduit le plus souvent par réseau logique programmable) ou un circuit PLA (sigle renvoyant à la dénomination anglaise de « Programmable logic array » qui se traduit le plus souvent par réseau logique programmable).

Selon une autre variante, l'organe de commande 44 est un circuit de type ASIC (sigle renvoyant à la dénomination anglaise de « application-specific integrated circuit signifiant littéralement : « circuit intégré propre à une application »).

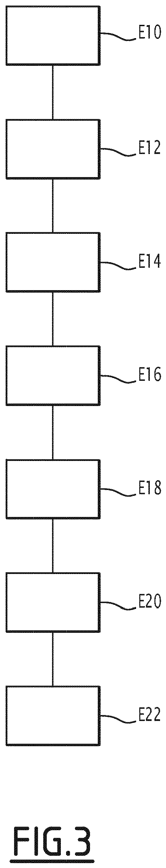

Le fonctionnement de l'installation ferroviaire 10 est maintenant décrit en référence à la figure 3 qui illustre un ordinogramme d'un exemple de mise en œuvre d'un procédé de commande des deux commutateurs 34.

Le procédé de commande vise à contrôler les deux commutateurs 34, c'est-à-dire à commander électriquement chacun des deux commutateurs 34.

Le procédé comporte une étape de calcul E10, une première étape d'envoi E12, une première étape de réception E14, une étape de mise en œuvre d'au moins une opération E16, une deuxième étape d'envoi E18, une deuxième étape de réception E20 et une étape d'application E22.

Lors de la première étape de calcul E10, le contrôleur central 16 calcule les lois de commandes L1 et L2 à appliquer à chaque organe de commutation 33.

La loi de commande d'un organe de commutation 33 comporte l'ensemble des ordres d'ouverture et de fermeture dudit organe de commutation 33 (et plus précisément du commutateur 34).

Chaque loi de commande L1 et L2 est une modulation de largeur d'impulsions. Une telle modulation est désignée soit par le sigle MLI renvoyant au terme français soit par le sigle PWM renvoyant au terme anglais de « Pulse Width Modulation ».

Chaque loi de commande L1 et L2 est alors un signal numérique carré variant entre deux états, un état bas et un état haut. Le signal carré a une fréquence fixe mais présente un rapport cyclique contrôlé numériquement.

Il en résulte que chaque loi de commande L1 et L2 permet en moyenne d'appliquer à une charge reliée aux commutateurs 34 un signal analogique variable au cours du temps.

Le signal analogique obtenu est appelé modulante.

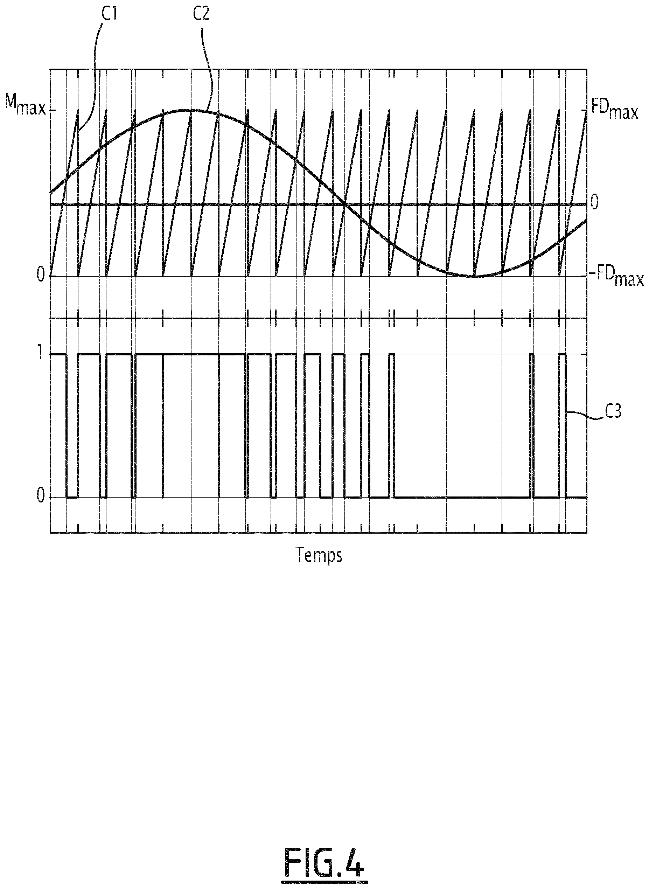

Un exemple de modulante est représenté sur la figure 4 sous la forme d'une première courbe C2.

Comme la modulante est périodique, la modulante présente une fréquence, dite fréquence de modulante.

La modulante présente aussi une amplitude maximale (différence entre le maximum et le minimum) qui est atteinte à chaque période.

Le nombre de points de la modulante obtenue sur une période de la modulante est appelé nombre d'échantillons.

Par ailleurs, la modulante présente une forme d'onde.

Par exemple, comme visible sur la figure 4, la forme d'onde de la modulante est une onde sinusoïdale.

Pour obtenir la loi de commande à appliquer à l'organe de commutation 33, il convient de définir également une fonction de découpage.

Une telle fonction est également représentée sur la figure 4 sous la forme d'une deuxième courbe C1.

Dans cet exemple, la fonction de découpage est une fonction triangulaire asymétrique.

La fonction de découpage présente une fréquence de découpage et une amplitude maximale (différence entre le maximum et le minimum) qui est atteint à chaque période.

Il est à noter que la fréquence de découpage est le produit de la fréquence de modulante par le nombre d'échantillons.

Le rapport de modulation est le rapport entre l'amplitude maximale de la modulante et l'amplitude maximale de la fonction de découpage.

Comme visible sur la figure 4, l'analyse des deux courbes C1 et C2 permet d'obtenir la loi de commande à appliquer à l'organe de commutation 33. Sur la figure 4, la loi de commande à appliquer est représentée par une troisième courbe C3 qui correspond au signal PWM à appliquer à l'organe de commutation 33.

Il est à noter qu'en pratique, lorsque la chaîne de traction alimente un moteur triphasé, la loi de commande de chaque commutateur associé à une phase est décalée par rapport à la loi des commutateurs associés aux autres phases afin, par exemple, de garantir un déphasage de 120° entre chaque phase.

Pour chaque loi de commande L1 et L2 calculée, le contrôleur central 16 déduit un ou plusieurs paramètres de calcul.

La fréquence de la modulante, la forme d'onde de la modulante, la fréquence de découpage et le rapport de modulation sont des exemples spécifiques de paramètres de calcul.

Le ou les paramètres de calcul déduit(s) pour une loi de commande est appelé dans ce qui suit un jeu de paramètres.

Selon les cas, le jeu de paramètres comporte un paramètre de calcul ou plus d'un paramètre de calcul.

Lors de la première étape d'envoi E12, le contrôleur central 16 envoie à destination de chaque module de puissance 40 le jeu de paramètres correspondant à chaque loi de commande L1 et L2 à appliquer à chaque organe de commutation 33 du module de puissance 40.

Selon l'exemple proposé, à destination du module de puissance 40 et notamment de l'organe de commande 44 de la figure 2, le contrôleur central 16 envoie un premier jeu de paramètres pour le premier organe de commutation 33 et un deuxième jeu de paramètres pour le deuxième organe de commutation 33.

La première étape d'envoi E12 est mise en œuvre de manière régulière, à une cadence suffisamment rapide pour assurer un transfert d'informations en temps réel.

Par exemple, la cadence de transfert est comprise entre 10 kiloHertz (kHz) et 100 kHz.

Lors de la première étape de réception E14, l'organe de commande 44 du module de puissance 40 reçoit chaque jeu de paramètres envoyé lors de la première étape d'envoi E12.

L'organe de commande 44 met alors en œuvre au moins une opération, ce qui correspond à l'étape de signe de référence E16.

Plusieurs exemples d'opérations sont proposés dans ce qui suit.

Selon un premier exemple, l'organe de commande 44 comporte une mémoire mémorisant une table pré-calculée associant à certains paramètres la loi de commande à appliquer.

A titre d'illustration, la table peut associer à la fréquence de modulante et au rapport de modulation une loi de commande.

Dans un tel exemple, l'étape E16 comporte la mise en œuvre d'une seule opération de lecture dans la table de la loi de commande correspondant aux paramètres présents dans la table pré-calculée.

Un tel premier exemple est compatible avec un nombre relativement restreint de modulantes.

Selon un deuxième exemple, l'organe de commande 44 comporte une mémoire mémorisant une table associant à certains paramètres d'une modulante présentant une fréquence de référence la loi de commande associée.

L'organe de commande 44 est, en outre, propre à projeter toute modulante à une fréquence donnée sur la modulante de fréquence de référence correspondante, c'est-à-dire la modulante présentant les mêmes paramètres à l'exception de la fréquence.

L'organe de commande 44 et plus généralement chaque organe de commande 44 reçoit un signal de référence temporel commun. Chaque organe de commande e44 st propre à générer la modulante à partir de la fréquence de modulante transmise par le contrôleur central 16, de la table mémorisée associée au jeu de paramètres reçu et du signal de référence temporel également appelé signal d'horloge.

Par exemple, l'organe de commande 44 est propre à lire la table de données comprenant des valeurs d'amplitude pour la modulante à partir du signal d'horloge reçu, avec une fréquence d'échantillonnage associée à la fréquence de modulante.

Dans l'exemple où la fréquence de modulante reçue est égale à 50 Hertz (Hz) et la table de données comprend 2000 échantillons correspondant à la forme de la modulante, la fréquence d'échantillonnage ou fréquence de lecture de la table de données est par exemple de 100KHz (50 x 2000) .L'organe de commande 44 lit alors la table de données toutes les 10 microsecondes (µs) et récupère les valeurs successives d'amplitude mémorisées dans la table de données toutes les 10 µs pour générer la modulante dont l'amplitude correspondra aux valeurs lues dans la table de données aux instants de lecture correspondant.

Avantageusement, l'organe de commande 44 utilise le principe de Bresenham pour associer à chaque période l'adresse de la valeur d'amplitude à récupérer dans la table de données pour générer la modulante.

De même, l'organe de commande 44 est propre à générer la fonction de découpage à partir de la fréquence de découpage transmise par le contrôleur central 16 et de valeurs maximale et/ou minimale d'amplitude pour la fonction de découpage mémorisées ou transmises par le contrôleur central 16.

Par exemple, la fonction de découpage est de forme d'onde triangulaire et l'organe de commande 44 la génère à partir d'un compteur de temps, c'est-à-dire du signal d'horloge qui s'incrémente de 0 à 1/(4 x (fréquence de découpage)) quatre fois de suite. Selon le quartier, considéré, l'organe de commande 44 additionne ou retranche la valeur maximale d'amplitude Vmax à une variable d'amplitude. Celle-ci varie donc de 0 à Vmax, puis de Vmax à 0 puis de 0 à -Vmax , puis de -Vmax à 0.

L'organe de commande 44 est ainsi propre à comparer les valeurs de modulante et de fonction de découpage à chaque période de lecture pour générer la loi de commande à appliquer au(x) commutateur(s) 34.

Dans un tel exemple, l'étape E16 comporte la mise en œuvre d'une opération de projection, d'une opération de lecture dans la table de la loi de commande correspondant aux paramètres présents dans la table et d'une opération de projection des lois de commande normées vers la loi de commande correspondant à la modulante souhaitée.

Un tel deuxième exemple est compatible avec un nombre relativement restreint d'amplitude pour la modulante souhaitée.

Selon un troisième exemple, l'organe de commande 44 comporte une mémoire mémorisant une table associant à certains paramètres d'une modulante présentant une amplitude de référence la loi de commande associée.

L'organe de commande 44 est, en outre, propre à projeter toute modulante à une amplitude donnée sur la modulante d'amplitude référence correspondante, c'est-à-dire la modulante présentant les mêmes paramètres à l'exception de l'amplitude.

L'organe de commande 44 est, également, propre à modifier l'amplitude de la fonction de découpage pour que celle-ci présente l'amplitude souhaitée pour la modulante.

Un tel troisième exemple est compatible avec un nombre relativement restreint de fréquence pour la modulante souhaitée.

Le quatrième exemple correspond à utiliser simultanément les deuxième exemple et troisième exemple.

Par exemple, dans un tel exemple, l'organe de commande 44 est propre à générer toute loi de commande à partir d'une table d'au moins 1024 mots entiers signés de 16 bits.

Pour cela, à titre d'exemple, les valeurs réelles de la modulante sont mémorisées après une multiplication par 32768 pour obtenir uniquement des entiers tout en tenant compte de la présente de nombres décimaux.

Une telle table contient les valeurs d'une fonction sur sa période.

A titre d'illustration, pour une modulante sinusoïdale, la valeur d'adresse 0 correspond à la valeur du sinus pour 0 et la valeur d'adresse 1023 correspond à la valeur du sinus pour 2π. Plus généralement, la valeur d'adresse i (i étant un entier compris entre 0 et 1023) correspond à la valeur du sinus pour 2π*i/1023.

Dans un tel cas, il est utilisé une fonction de surjection linéaire (à savoir x donne 2π*i/1023).

Toutefois, lorsque cela est approprié, la fonction de surjection est différente pour mieux rendre compte des variations de la modulante souhaitée, notamment si une portion de la modulante est constante puisqu'il n'y a pas besoin de calculer les points dans cette portion.

Il est également à noter que la table est compatible avec toute forme de fonction pour la modulante.

Par ailleurs, dans un tel exemple, l'organe de commande 44 effectue uniquement des opérations simples d'additions et de comparaison de nombre entiers.

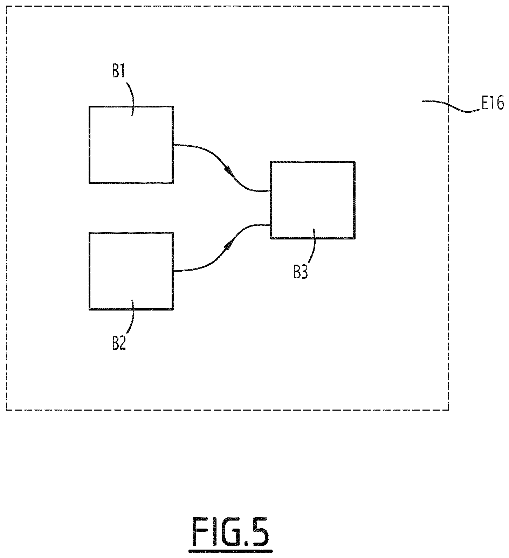

Un exemple concret de mise en œuvre du quatrième exemple est maintenant décrit en référence à la figure 5 qui illustre un exemple de réalisation particulier de l'étape E16.

Selon l'exemple de la figure 5, l'étape E16 est organisée en trois blocs d'opérations dénommés respectivement premier bloc B1, deuxième bloc B2 et troisième bloc B3.

Par ailleurs, comme dans les exemples précédents, il est utilisé une table.

Le premier bloc B1 vise à reconstituer la modulante.

Dans le premier bloc B1, il est reçu la période de la fréquence modulante, paramètre qui est noté premier paramètre P1.

Dans le premier bloc B1, une opération de comptage du temps s'écoulant entre 0 et le premier paramètre P1 est mise en œuvre.

Une telle opération de comptage s'effectue au rythme de l'horloge H qui est également fournie en entrée du premier bloc B1.

L'horloge correspond, par exemple, à une fréquence de 50 MégaHertz (MHz).

A chaque instant mesuré par l'opération de comptage, la fonction de surjection précédemment évoquée est mise en œuvre pour projeter l'intervalle de temps écoulé depuis un point de référence (typiquement le début de la période de la modulante souhaitée) en une adresse de la table utilisée.

L'adresse obtenue est utilisée pour obtenir la valeur courante de la modulante par lecture du contenu de la table.

Lorsque l'opération de chronométrage arrive à la valeur P1, une opération de réinitialisation est mise en œuvre et l'opération de comptage est recommencée à 0.

Le premier bloc B1 fonctionne en continu.

Le deuxième bloc B2 est mis en œuvre simultanément avec le premier bloc B1.

Le deuxième bloc B2 vise à reconstituer la fonction de découpage à partir d'un deuxième paramètre P2 et d'un troisième paramètre P3.

Dans l'exemple proposé, chacun des trois paramètres P1 à P3 sont des entiers signés.

En outre, les trois paramètres comportent au moins 24 bits.

Plus généralement, le nombre de bits est choisi pour que l'amplitude de la découpe puisse être grande devant la valeur de la table.

Ainsi, le deuxième bloc B2 permet d'obtenir l'amplitude de la fonction de découpage en contenue sous forme d'une variable signée de 24 bits.

En l'occurrence, selon l'exemple décrit, la fonction de découpage est une forme d'onde triangulaire symétrique dont la période est 4 x P2, et l'amplitude maximale est égale à P2 x P3.

Dans l'exemple proposé, le deuxième paramètre P2 est le quart de la période de la fonction de découpage alors que le troisième paramètre P3 est tel que le produit du deuxième paramètre et du troisième paramètre est égal à l'amplitude positive maximale de la fonction de découpage.

Le deuxième bloc B2 implémente une opération de comptage du temps écoulé entre 0 et P2 et ce quatre fois de suite. Cela permet de diviser une période de la fonction de découpage en quatre quartiers.

Selon le quartier considéré, le deuxième bloc B2 additionne ou soustrait P3 à la variable d'amplitude.

La valeur d'amplitude de la fonction de découpage varie ainsi de 0 à P2 x P3 durant le premier quartier, puis de P2 x P3 à 0 lors du deuxième quartier, puis, sur le troisième quartier, de 0 à - P2 x P3 et puis de - P2 x P3 à 0.

Similairement au cas du premier bloc B1, le deuxième bloc B2 fonctionne en continu.

Le troisième bloc B3 permet d'obtenir la valeur de la loi de commande à partir des valeurs de sortie du premier bloc B1 et du deuxième bloc B2 via une simple étape de comparaison.

Dans tous les cas présentés, chaque opération mise en œuvre par l'organe de commande 44 utilise au moins un élément du jeu de paramètres reçu que ce soit directement ou indirectement, c'est-à-dire soit un des paramètres du jeu de paramètres soit une grandeur issue d'un des paramètres du jeu de paramètres.

Formulé autrement, l'organe de commande 44 calcule la loi de commande L1 ou L2 à appliquer à chaque organe de commutation 33 en fonction du jeu de paramètres correspondant reçu.

Lors de la deuxième étape d'envoi E18, l'organe de commande 44 du module de puissance 40 envoie chaque loi de commande L1 ou L2 à la commande de grille 36 du commutateur 34 à laquelle la loi de commande L1 ou L2 est à appliquer.

Lors de la deuxième étape de réception E20, la loi de commande L1 ou L2 est reçue par chaque commande de grille 36.

Plus précisément, la première commande de grille 36 reçoit la première loi de commande L1 et la deuxième commande de grille 36 reçoit la deuxième loi de commande L2.

Lors de l'étape d'application E22, chaque commande de grille 36 applique la loi de commande L1 ou L2 reçue au commutateur 34 associé.

En particulier, la première commande de grille 36 applique la première loi de commande L1 au premier commutateur 34 tandis que la deuxième commande de grille 36 applique la deuxième loi de commande L2 au deuxième commutateur 34.

Le premier commutateur 34 suit ainsi la première loi de commande L1 désirée, de même que le deuxième commutateur 34 suit la deuxième loi de commande L2 souhaitée.

Le procédé de commande permet donc d'assurer un contrôle efficace des commutateurs 34 tout en n'envoyant plus l'ensemble de la loi de commande depuis le contrôleur central 16 vers chaque organe de commande 44 des modules de puissance 40.

Seuls sont transmis les jeux de paramètres.

Le procédé permet ainsi de réduire considérablement le nombre d'informations transmises entre le contrôleur central 16 et les modules de puissances 40. Typiquement un facteur de réduction de l'ordre du million peut être atteint grâce à un tel procédé.

Par ailleurs, cela permet de faciliter la redondance de l'information.

Des tests effectués par la demanderesse ont montré que les lois de commande obtenues sont compatibles avec la sécurité exigée dans le domaine ferroviaire.

Le procédé est, en outre, indépendant de la technique utilisée pour communiquer entre le contrôleur central 16 et les modules de puissance 40.

En particulier, il est possible de conserver une architecture filaire entre les composants, ce qui facilite l'obtention d'une bonne compatibilité électromagnétique pour l'installation ferroviaire 10.

Le cas filaire permet aussi de s'abstraire des problèmes de variation des performances en fonction de la température rencontrée par les liaisons optiques.

Il est également à noter que l'implémentation du procédé sur une architecture existante peut être mise réalisée par une simple reprogrammation des composants, typiquement par un chargement des programmes adaptés sur le contrôleur central 16 et sur chaque organe de commande 44. En outre, si besoin, le procédé peut être implémenté sur uniquement une partie de l'installation en ne reprogrammant que les organes de commande 44 souhaités.

En résumé, le procédé proposé permet, d'une manière simple et pratique, de commander un ou plusieurs organes de commutation 33 tout en restant compatible avec l'augmentation des fréquences de découpage et du nombre de commutateurs 34.

Tous les modes de réalisation qui viennent d'être décrits peuvent être combinés pour former d'autres modes de réalisation lorsque ces modes de réalisation sont techniquement compatibles.

## Revendications

1. Procédé de commande d'au moins un organe de commutation (33) par un organe de commande (44) faisant partie d'un module de puissance (40), le procédé comportant :
- la réception par l'organe de commande (44) d'au moins un jeu de paramètres pour le calcul d'au moins une loi de commande de l'organe de commutation (33),
- la mise en œuvre par l'organe de commande (44) d'au moins une opération à partir de chaque jeu de paramètres pour obtenir au moins une loi de commande, et
- l'envoi par l'organe de commande (44) de chaque loi de commande obtenue à destination de l'organe de commutation (33).

2. Procédé selon la revendication 1, dans lequel le module de puissance (40) est contrôlé par un contrôleur central (16), le procédé comportant, en outre, l'envoi du au moins un jeu de paramètres à l'organe de commande (44) par le contrôleur central (16).

3. Procédé selon la revendication 1 ou 2, dans lequel la loi de commande est une modulation de largeur d'impulsions.

4. Procédé selon l'une quelconque des revendications 1 à 3, dans lequel au moins une opération est une opération d'utilisation d'une table associant des valeurs à au moins un paramètre du jeu de paramètres reçu par le module de puissance (40).

5. Procédé selon l'une quelconque des revendications 1 à 4, dans lequel la loi de commande est obtenue à partir d'une fonction souhaitée et d'une fonction de découpage, le jeu de paramètres comportant une grandeur représentative de la fréquence de la fonction souhaitée et une grandeur représentative du rapport en amplitude entre la fonction souhaitée et la fonction de découpage.

6. Procédé selon l'une quelconque des revendications 1 à 5, dans lequel les paramètres de jeux de paramètres présentent une taille comprise entre 16 bits et 24 bits.

7. Organe de commande (44) adapté à commander au moins un organe de commutation (33), l'organe de commande (44) étant adapté à :
- recevoir au moins un jeu de paramètres pour le calcul d'au moins une loi de commande de l'organe de commutation (33),
- mettre en œuvre au moins une opération à partir de chaque jeu de paramètres pour obtenir au moins une loi de commande, et
- envoyer chaque loi de commande obtenue à destination de chaque organe de commutation (33).

8. Véhicule ferroviaire ou installation ferroviaire comportant un module de puissance (40) comprenant un organe de commutation (33) et un organe de commande (44) selon la revendication 7, le module de puissance (40) étant, de préférence, propre à commander l'alimentation en énergie électrique d'un moteur de traction.

9. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'd'un procédé selon l'une quelconque des revendications 1 à 6 lorsque le programme d'ordinateur est mis en œuvre sur l'unité de traitement des données.

10. Support lisible d'informations mémorisant un programme d'ordinateur comprenant des instructions de programme, le programme d'ordinateur étant chargeable sur une unité de traitement de données et adapté pour entraîner la mise en œuvre d'un procédé selon l'une quelconque des revendications 1 à 6 lorsque le programme d'ordinateur est mis en œuvre sur l'unité de traitement des données.
